(19) Europäisches Patentamt

European Patent Office

Office européen des brevets

(11) **EP 3 173 983 A1**

(12) **EUROPEAN PATENT APPLICATION**

(43) Date of publication:
**31.05.2017 Bulletin 2017/22**

(51) Int Cl.:
**G06N 3/10** *(2006.01)* **G06F 17/27** *(2006.01)*
**G06F 17/30** *(2006.01)* **G06N 3/04** *(2006.01)*

(21) Application number: **15196557.1**

(22) Date of filing: **26.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft**
**80333 München (DE)**

(72) Inventors:
• **Kumar Karn, Sanjeev**
**81377 München (DE)**
• **Waltinger, Ulli**
**86633 Neuburg (DE)**

(54) **A METHOD AND APPARATUS FOR PROVIDING AUTOMATICALLY RECOMMENDATIONS CONCERNING AN INDUSTRIAL SYSTEM**

(57)    A diagnostic system and method for providing recommendations concerning an industrial system, said diagnostic system (1) comprising an extraction unit (2) adapted to recognize ontology instances of classes within a domain related ontology using a recurrent neural network (RNN) trained with annotations of input data received from distributed data sources and adapted to derive relations between recognized ontology instances using a convolutional neural network (CNN) and to generate triples (T) each comprising a derived relation and the corresponding ontology instances; and a processing unit (3) adapted to retrieve at least one recommendation (R) in response to an inquiry and triples (T) inferred by an inference engine (IE) from a knowledge based database (KB) populated with triples (T) generated by said extraction unit (2). The semantic representation vectors for vocabulary of words used in the received unstructured domain related data are calculated using a neural network language model (NNLM).

**FIG 2**

EP 3 173 983 A1

**Description**

The invention relates to a method and apparatus for providing automatically recommendations concerning an industrial system using a machine learning and a statistical approach on industrial data.

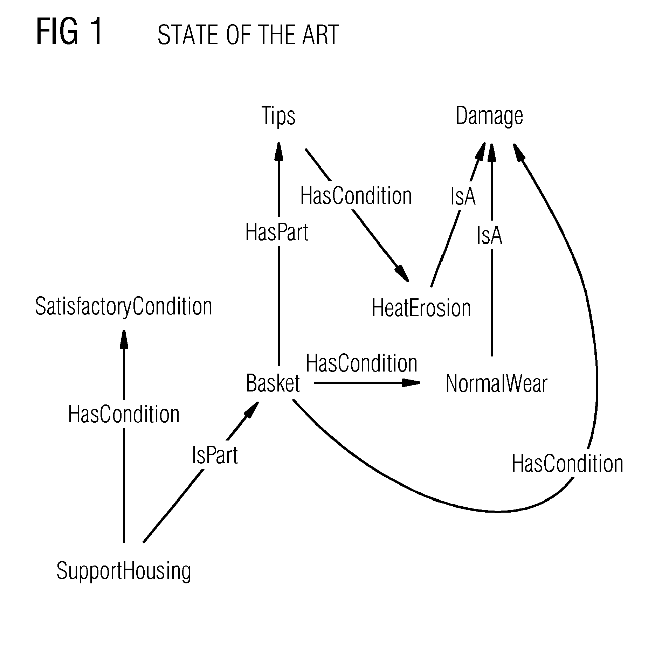

Systems in different technical domains like industry, healthcare, biomedicine provide continuously a large amount of data related to the respective system. This data comprises structured and unstructured data. A large number of documents are generated every day in the different technical domains. For example unstructured documents are service reports comprising text documents having embedded images and/or tables. The information given inside these documents is spread over text sentences, images, tables, etc. A sentence in turn contains multiple entities and these entities exhibit some types of relation between them. The information within the document can follow a pattern. These patterns are based on the entities and relations between entities present in the respective document. These documents can be derived from various web-sites, web pages present on distributed servers over an internet/intranet or in knowledge databases. Large-scale knowledge databases can comprise millions of facts and information data sets collected from a plurality of web pages. Search engines can use knowledge graphs for retrieving information. Fig. 1 illustrates a conventional industrial knowledge graph KB linking entities as nodes with potential relationships as edges.

Accordingly, it is an object of the present invention to provide a method and apparatus for providing automatically recommendations concerning an industrial system from a complex heterogeneous and dynamic knowledge base.

This object is achieved according to a first aspect of the present invention by a method comprising the features of claim 1.

The invention provides according to a first aspect a method for providing automatically recommendations concerning an industrial system, said method comprising the steps of:

> recognizing ontology instances of classes within a domain related ontology using a recurrent neural network trained with annotations of input data received from distributed data sources,
> deriving relations between recognized ontology instances using a convolutional neural network and generating triples each comprising a derived relation and the corresponding ontology instances and
> retrieving at least one recommendation in response to an inquiry and triples inferred from a knowledge based database populated with the generated triples.

In a possible embodiment of the method according to the first aspect of the present invention, the input data comprises structured and/or unstructured domain related data received from distributed data sources.

In a possible embodiment of the method according to the first aspect of the present invention, the unstructured domain related data comprises service reports including text documents related to a technical domain of the respective industrial system.

In a still further possible embodiment of the method according to the first aspect of the present invention, the unstructured domain related data is annotated with a seed set of entities forming part of the domain related ontology.

In a further possible embodiment of the method according to the first aspect of the present invention, semantic representation vectors for a vocabulary of words used in the received unstructured domain related data are calculated using a neural network language model.

In a further possible embodiment of the method according to the first aspect of the present invention, relations between recognized ontology instances are derived using the convolutional neural network on the basis of the calculated semantic representation vectors and position embedding vectors learned during training of the convolutional neural network with the annotations.

In a still further possible embodiment of the method according to the first aspect of the present invention, the at least one recommendation is retrieved in response to the inquiry, the inferred triples and in response to historical recommendations.

In a still further possible embodiment of the method according to the first aspect of the present invention, the recurrent neural network used for recognizing ontology instances of classes within the domain related ontology can be a Elman recurrent neural network.

In a further possible embodiment of the method according to the first aspect of the present invention, the recommendations are output via a user interface to a user and/or output as control signals to control units and/or actors of the industrial system.

The invention further provides according to a second aspect a diagnostic system for providing recommendations concerning an industrial system comprising the features of claim 10.

The invention provides according to the second aspect a diagnostic system for providing recommendations concerning an industrial system,
said diagnostic system comprising:

an extraction unit adapted to recognize ontology instances of classes within a domain related ontology using a recurrent neural network trained with annotations of input data received from distributed data sources and adapted to derive relations between recognized ontology instances using a convolutional neural network and to generate triples each comprising a derived relation and the corresponding ontology instances; and

a processing unit adapted to retrieve at least one recommendation in response to an inquiry and triples inferred by an inference engine from a knowledge-based database populated with triples generated by said extraction unit.

In a possible embodiment of the diagnostic system according to the second aspect of the present invention, the input data comprises structured and/or unstructured domain related data received from distributed data sources, wherein the unstructured domain related data comprises service reports including text documents related to a technical domain of the respective industrial system.

In a still further possible embodiment of the diagnostic system according to the second aspect of the present invention, the unstructured domain related data is annotated with a seed set of entities forming part of the domain related ontology stored in a database.

In a still further possible embodiment of the diagnostic system according to the second aspect of the present invention, semantic representation vectors for a vocabulary of words used in the received unstructured domain related data are calculated using a neural network language model.

In a still further possible embodiment of the diagnostic system according to the second aspect of the present invention, relations between recognized ontology instances are derived using the convolutional neural network on the basis of the calculated semantic representation vectors and position embedded vectors learned during training of the convolutional neural network with the annotations.

In a further possible embodiment of the diagnostic system according to the second aspect of the present invention, the processing unit is adapted to retrieve the at least one recommendation in response to an inquiry, the inferred triples and in response to historical recommendations.

In a still further possible embodiment of the diagnostic system according to the second aspect of the present invention, the recurrent neural network used for recognizing ontology instances of classes within the domain related ontology can comprise an Elman recurrent neural network.

In a still further possible embodiment of the diagnostic system according to the second aspect of the present invention, the at least one retrieved recommendation is output via a user interface to a user.

In a still further possible embodiment of the diagnostic system according to the second aspect of the present invention, the at least one retrieved recommendation is output as control signals to control units and/or to actors of the respective industrial system.

In the following, possible embodiments of the different aspects of the present invention are described in more detail with reference to the enclosed figures.

Fig. 1    shows a diagram of a conventional industrial knowledge graph as used in a conventional information retrieval system;

Fig. 2    shows a flowchart of a possible exemplary embodiment of a method for providing automatically recommendations concerning an industrial system according to an aspect of the present invention;

Fig. 3    shows a block diagram of a possible exemplary embodiment of a diagnostic system for providing recommendations concerning an industrial system according to a further aspect of the present invention;

Fig. 4    shows an architecture of a possible exemplary embodiment of a diagnostic system according to the present invention;

Fig. 5    shows a diagram for illustrating the operation of a recurrent neural network as employed by the method and apparatus according to the present invention;

Fig. 6    shows a diagram for illustrating an exemplary convolutional neural network CNN which can be employed by a method and apparatus according to the present invention.

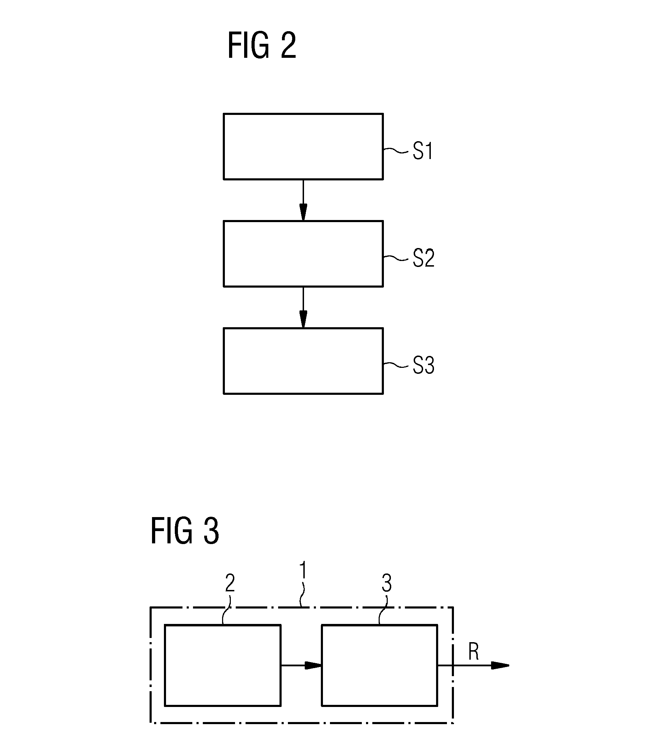

As can be seen in the flowchart as illustrated in Fig. 2, the method for providing automatically electronic recommendations concerning an industrial system can comprise several steps.

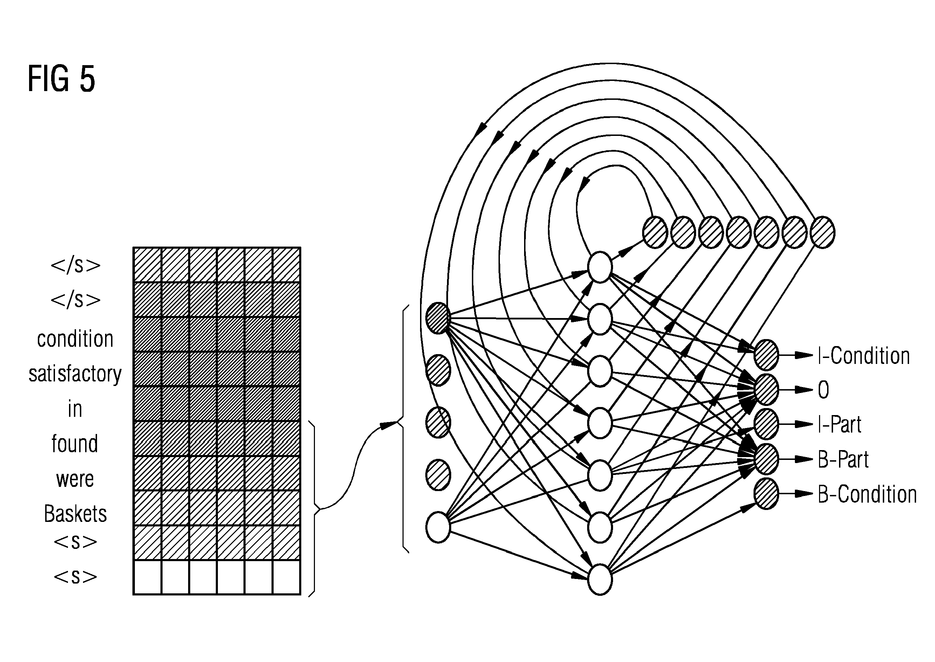

In a first step S1, ontology instances of classes within a domain related ontology are recognized using a recurrent neural network RNN trained with annotations of input data received from distributed data sources. In a possible embodiment, the recurrent neural network RNN used for recognizing ontology instances of classes within the domain related ontology can be formed by an Elman recurrent neural network. The recurrent neural network RNN is adapted to replicate a brain network by allowing directed cycles but no organized layers in it. Regarding computation, a recurrent neural network RNN takes an input vector x to provide an output vector y, wherein the output vector y is not only influenced by the input vector x fed into the RNN but also by the entire history of inputs fed to the RNN in the past. Because of this characteristic use of previous activities to compute activities at each timestamp RNN are said to possess a memory which can be used to influence its decision. While training recurrent neural networks RNN propagation is impossible due to cycle dependencies and the lack of layers. In a possible embodiment, the recurrent neural network RNN used for recognizing the ontology instances can be formed by an Elman type RNN. In contrast to a feedforward neural network with an Elman RNN, the output from the hidden layer at time t-1 is kept and fed back to the hidden layer at time t along with an input x(t) for time t. As depicted in Fig. 5, an Elman recurrent neural network can be interpreted as having an additional set of virtual nodes where the connection from hidden nodes connects them with a weight of one. At each timestamp, the input is propagated like in a feedforward network and then parameter updating is performed based on the output which is generated through recurrent connections from the past states and saved over a context. Context nodes always maintain a copy of the previous values of hidden nodes before an update is performed by propagating the values from time t-1 through recurrent connections. Thus, the recurrent neural network RNN can learn using a sort of past inputs and can be used for tasks like sequence predictions which cannot be accomplished as efficiently using feedforward networks. A utilized Elman recurrent network can be described as:

$$y(t) = g\big(Wh(t)\big),$$

$$h(t) = f\big(Ux(t) + Vh(t-1)\big),$$

where $g(z_m) = \dfrac{exp^{zm}}{\sum_k exp z_k}$ is a softmax function and $f(x) = \dfrac{1}{1+exp^{-1}}$ , wherein U and V are weight matrices between input and hidden nodes and between context nodes and hidden nodes, respectively. W is a weight matrix between hidden and output nodes. The input x(t) has the dimension of the context window times the dimension of word embedding. The output y(t) is an output label which can be for instance a B-condition, a I-condition, a B-part, an I-part or 0. The input x(t) to the recurrent neural network RNN is passed by a sliding window over the sentence where the word to be classified is the central part in the respective window. In the example illustrated in Fig. 5, a sentence within an unstructured text document read from a data source is: "Baskets were found in satisfactory condition". A sliding window of e.g. five words may include empty entries s, s followed by three words "baskets were found". Each window can be represented in a multidimensional vector having for instance 5 to 50 or vector fields.

An additional parameter in RNN is the matrix for linear projection of the previous hidden layer state at t-1 to a subsequent hidden state at time t. The hyper parameters for the network are a number of hidden units in the network, a random seed to initialize the respective data model, the window size of embeddings to feed the recurrent neural network RNN, and a learning rate. In addition, to prevent over fitting, the system can use L1 and L2 regulation and thus additional parameters from the regulation can be included into the hyper parameter list.

In a possible embodiment, vector representation out of a large amount of unlabeled service reports or documents is generated. For instance, a skip-gram architecture can be employed using a hierarchical softmax training algorithm in which the dimensionalities of word vectors are set to 50. A context window for a skip-gram can be set to 10 by which the minimum word count within the corpus can be set to 1. That is, the entire text documents are used to learn vector representations of every word in an industrial text vocabulary in an unsupervised manner. These representations can then be used as an input to the recurrent neural network RNN. The Elman-based recurrent neural network utilizes word embedding updates and a softmax classification for the output layer. In a possible embodiment, the method utilizes a three-layer Elman-based recurrent neural network RNN. In a possible embodiment, the method may utilize a stacking of restricted Boltzmann machines RBMs and optionally perform a fine-tuning of the resulting deep network with gradient descent and back-propagation.

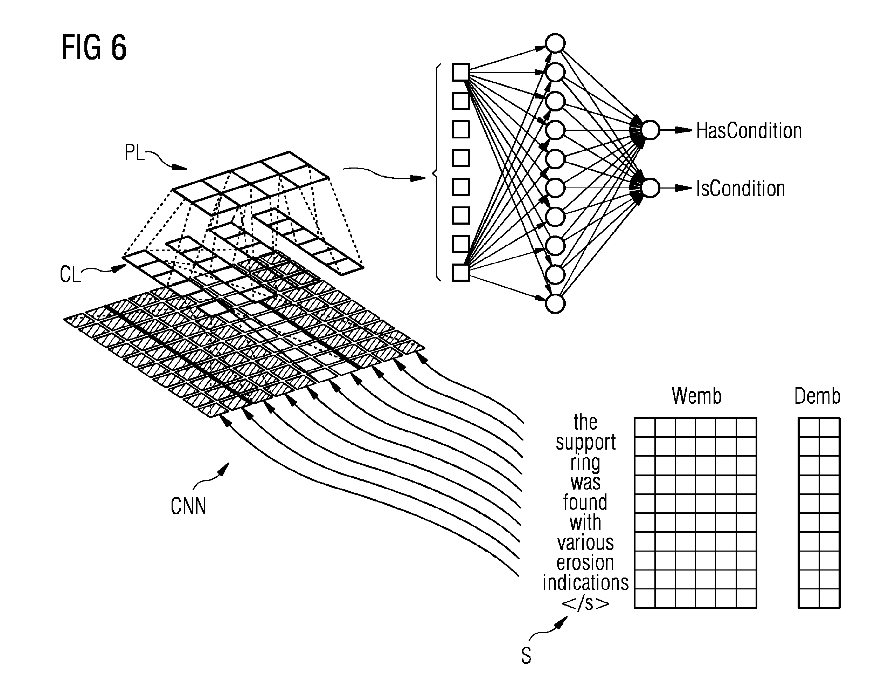

As can be seen in the flowchart of Fig. 2, in a further step S2, relations between recognized ontology instances are derived using a convolutional neural network CNN to generate triples each comprising a derived relation and the two corresponding ontology instances having the derived relationship. A convolutional neural network CNN tries to emulate an animal visual cortex responsible for visual processing. The architecture of a convolutional neural network CNN is designed to take advantage of local connectivity patterns or correlations like in images. A further advantage of using convolutional neural networks CNN is the exponential reduction of parameters and thus an efficient and faster training. The method according to the present invention can take advantage of multiple window sizes on pre-trained word embeddings of sentences for feature extractions and can use these extracted features for relationship learning. Word embeddings Wemb are capable to capture the hidden syntactic and semantic properties of words and the system convolutional neural network CNN uses them to recognize specific classes of n-gram which actually represents the respective sentence. Further, the system can include position embeddings Demb in addition to word embeddings that encode the relative distances between a word and an ontological instance in the respective sentence S. As illustrated in Fig. 6, Wemb and Demb are combined and represent an input to a convolution layer C of the convolutional neural network CNN. The method can use various window sizes for convolutional filters and can use pre-trained word embeddings for initialization. Both word and position embeddings act as model parameters and are updated. As can be seen in Fig. 6, the convolutional neural network CNN comprises basically four layers, i.e. lookup tables for word embedding Wemb and position embedding Demb, a convolutional layer CL to recognize import features (n-grams), a pooling layer PL to determine the best among the features recognized in the previous layer and a feedforward network with a logistic layer.

A constraint when using a convolutional neural network CNN is that the input should be of the same length. Thus, for a service report relation classification, in a preferred embodiment, a trimming of a long sentence within the respective document is performed or if the sentence is short a padding is performed with special predetermined symbols. In a typical service report, the included text comprises long sentences having a length of approximately 50 words. These long sentences although they are not frequent can contain a significant number of entities. Consequently, in a possible embodiment of the method according to the present invention, the input sentence length is fixed to 55. Let $x = [x_1, x_2, ..., x_n]$ be a sentence S of length n, $x_i$ denoting the $i^{th}$ word in the sentence, the input to the convolutional neural network CNN can be formed by:

Fetching a word embedding $e_i$ vector of dimension $m_e$ corresponding to each $x_i$ using word embedding Wemb and then fetching a position embedding for each word $x_i$ by first getting the relative distance of word $x_i$ with respect to an ontology instance $x_{i1}$ and $x_{i2}$. These distances can then be used as index to fetch an item from position embedding Demb.

The position embedding Demb can include values for either 0 to n-1 where positions are relative unsigned values or -n+1 to n-1 where positions are relative signed values. If $m_d$ denotes the dimensionality of the position embedding vectors, the input to the convolutional neural network CNN is a matrix X of size $(m_e+2m_d)$ x n.

As illustrated in Fig. 6, given a window size w, a filter matrix $f = [f_1, f_2, ..., f_w]$ with randomly initialized weight with each column being a vector of size $(m_e)+2m_d$ can then be applied to input matrix X in a sliding manner thus producing a score sequence $s = [s_1, s_2, ...,s_{n-w+1}]$.

$$s_i = g \left( \sum_{j=0}^{w-1} f_{j+1}^T X_{j+1}^T + b \right) \qquad (1)$$

wherein b is a bias term and g is a non-linear function. This score sequence corresponds to a vector in the middle layer on the left section of Fig. 6. The process can be repeated for various filters, wherein these filters can be of different window sizes for increasing n-gram choices for the model. The trained weights of the filter f can act as a feature detector, wherein these weights are learned to recognize the hidden class of augmented n-grams. At the same time, it can be interpreted that $s_i$ represents the measures that the augmented n-grams at position i fall to a corresponding class. The pooling layer PL, which provides a maximum pooling, can further abstract the features extracted through the convolution layer CL of the convolutional neural network CNN. The pooling layer PL functions by aggregating the scores from each filter so as to introduce the invariance to the absolute positions but preserve the relative positions of n-grams with respect to other n-grams. This max function is applied with a specific window size producing a number $p_f = \max\{s\} = \max\{s_1,s_2, ...,s_{n-w+1}\}$ and therefore a more abstract vector representation of the sequence.

$$p_f = \max\{s\} = \max \{s_1, s_2, ..., s_{n-w+1}\}$$

Finally, the pooling score from all convolution pooling processes can be concatenated into a single vector z. In case of relation classification, a dropout regularization can be applied to feature vector z for producing dropout vector $z_d$. This dropout vector $z_d$ can then be fed to a fully connected neural network with a softmax layer for classification. The convolutional neural network CNN allows to learn features automatically. The method according to the present invention utilizes a minimum amount of labeled data and can use word embedding as the only externally input apart from parameters of the convolutional neural network CNN. The relation extraction is performed using a convolutional neural network CNN utilizing word and position embeddings. In step S2, relations between recognized ontology instances are derived using the convolutional neural network CNN. For each derived relation, a triple T is generated comprising the derived relations and the corresponding ontology instances.

In a final step S3 of method illustrated in fig. 2, at least one recommendation is retrieved in response to an inquiry and triples T inferred from a knowledge based database populated with the generated triples T.

Fig. 3 shows a block diagram of a possible exemplary embodiment of a diagnostic system 1 for providing recommendations concerning an industrial system according to a further aspect of the present invention. The diagnostic system 1 comprises an extraction unit 2 and a processing unit 3. The extraction unit 2 is adapted to recognize ontology instances of classes within a domain related ontology using a recurrent neural network RNN trained with annotations of input data received from distributed data sources and adapted to derive relations between recognized ontology instances using a convolutional neural network CNN and to generate triples T each comprising a derived relation and corresponding ontology instances. The triples T generated by the extraction unit 2 are used to populate a knowledge based database.

The processing unit 3 of the diagnostic system 1 is adapted to retrieve at least one recommendation R in response to an inquiry and triples T inferred by an inference engine from the knowledge based database populated with the triples generated by the extraction unit 2.

The input data applied to the extraction unit 2 can comprise structured and/or unstructured domain related data received from distributed data sources. The unstructured domain related data can comprise for instance service reports including text documents related to a technical domain of the respective industrial system. In a possible embodiment, the unstructured domain related data can be annotated with a seed set of entities forming part of the domain related ontology stored in a database. In a possible embodiment, semantic representation vectors for a vocabulary of words used in the received unstructured domain related data are calculated using a neutral network language model NNLM.

An NNLM model is adapted to learn a $f(w_t, \dots, w_{t-n+1}) = \overline{P}(w_t | w_1^{t-1})$ given a training set with sentences having a sequence of $w_1, \dots, w_T$ words present in a vocabulary V. The function

$$f(w_t, \dots, w_{t-n+1}) = \overline{P}(w_t | w_1^{t-1})$$ is in turn decomposed in two parts so as to form a feedforward neural network with a linear projection layer and a non-linear hidden layer which can jointly learn the word vector representation. The word embeddings provided by the neural network language model NNLM can be supplied to the Elman recurrent neural network ERNN. The relations between recognized ontology instances are derived by the extraction unit 2 of the diagnostic system 1 using a convolutional neural network CNN on the basis of the calculated semantic representation vectors and position embedded vectors learned during training of the convolutional neural network CNN with the annotations. The processing unit 3 of the diagnostic system 1 is adapted to retrieve the at least recommendation R in response to the inquiry, in response to inferred triples and in response to historical recommendations. The recurrent neural network RNN used by the extraction unit 2 for recognizing ontology instances of classes within the domain related ontology is in a preferred embodiment an Elman recurrent neural network. The at least one retrieved recommendation R output by the processing unit 3 of the diagnostic system 1 can be output via a user interface to a user or operator. Further, the retrieved recommendation R can be output as control signals to control units and/or actors of the respective industrial system.

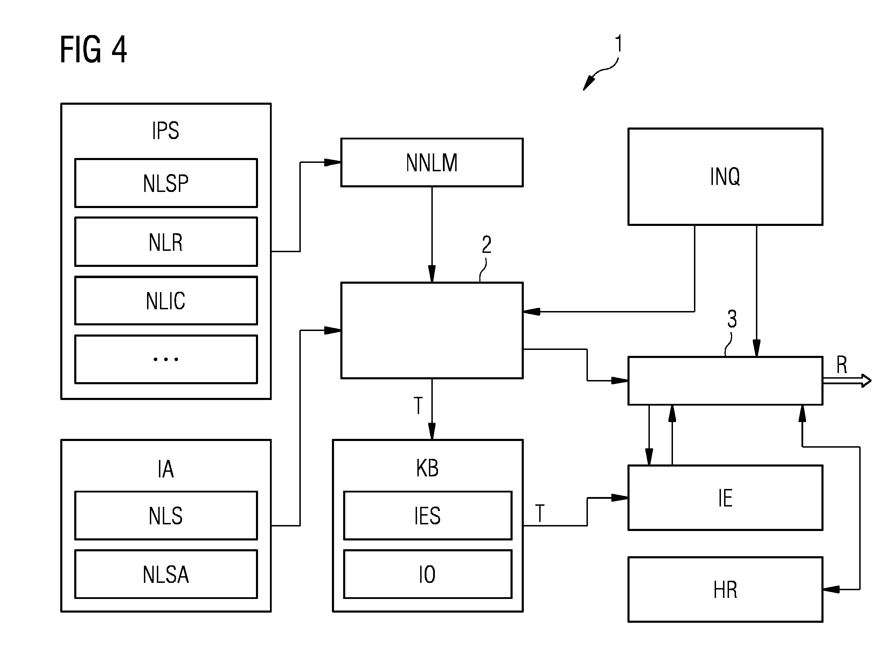

Fig. 4 illustrates a possible architecture of a diagnostic system 1 according to the present invention. The system 1 comprises in the illustrated architecture an extraction unit 2 connected to a processing unit 3 adapted to retrieve at least one recommendation R. An unsupervised industry data stream IDS is supplied to the neural network language model NNLM providing word embeddings supplied to the extraction unit 2 as illustrated in Fig. 4. The industrial data stream IDS comprises high frequent data including natural language service procedures NLSP, natural language reports NLR or natural language image captions NLIC. The extraction unit 2 performs an entity recognition and a relation extraction. Besides the word embeddings received from the neural network language model NNLM, the extraction unit 2 further receives supervised low frequent data comprising industry annotations IA. These industry annotations comprise natural language sentences NLS and natural language sentence annotations NLSA. The extraction unit 2 is adapted to recognize ontology instances of classes within a predetermined domain related ontology using a recurrent neural network RNN trained with annotations of input data received from distributed data sources. Further, the processing unit 3 performs a relation extraction, i.e. relations between recognized ontology instances are derived using a convolutional neural network CNN to generate triples each comprising a derived relation and the two ontology instances having this derived relation. The generated triples T are used to populate an industrial IES and an industry ontology 10. The industrial knowledge graph KB provides structured knowledge of the respective technical domain. The processing unit 3 is adapted to retrieve the at least one recommendation R in response to an inquiry and triples inferred by an inference engine IE from the knowledge based database KB populated with triples T generated by the extraction unit 2. In a possible embodiment, the processing unit 3 is adapted to retrieve the at least one recommendation R in response to the inquiry INQ, inferred triples and historical recommendations HR as illustrated in Fig. 4. The diagnostic system 1 according to the present invention as illustrated in the embodiment of Fig. 4 uses a neural network model for extracting semantic representations for a vocabulary (word embeddings) which are present over high frequent industrial data streams IDS in a unsupervised manner. These embeddings along with relatively few supervised sentences generated through a bootstrapping system can be used to train the information extraction unit 2 of the diagnostic system 1. The facts comprising triples T generated by the extraction unit 2 are used to populate the industrial knowledge graph KB stored in a memory. The nature of the industrial knowledge graph KB is dynamic, i.e. it adds and prunes the stored facts, i.e. triples T with the incoming input stream of data

fed into the system. The information extraction forms a core part of the knowledge graph construction. It consists of entity recognition and relation extraction. In the diagnostic system 1, for dynamic building of the knowledge graph KB, an addition module for ontology extension can be used. In a possible embodiment, the diagnostic system 1 uses an forward recurrent neural network RNN for entity recognition and uses the convolutional neural network CNN for relation classification. The entity recognition uses unsupervised learned distributed representation for words along with optimal network parameters. The relation extraction uses the position embedding, word embedding and network parameters. The position embeddings Demb are dynamically learned parameters which provide the relation extraction unit 2 with positional details about the involved entities. The ontology extension can use the trained convolutional neural network CNN and clustering for inferring new relations on existing entity categories.

The diagnostic system 1 generates recommendations R based on the input signals. These input signals are structured and/or unstructured data. The inference engine IE provides the processing unit 3 with required information for generating input specific recommendations. The inference engine IE of the diagnostic system 1 operates on the structured knowledge graph KB generated by the extraction unit 2.

Every recommendation R that the diagnostic system 1 generates can be validated in a possible embodiment using historical recommendations HR.

The method and apparatus according to the present invention can be used for a wide range of applications. For example, turbines with different parts at various locations in the world need to follow a prescribed maintenance and repair program. The repair and maintenance is usually done at turbine parts level, wherein these parts can have specific defects which follow a special pattern. These patterns are based on various attributes of parts, like location of the turbine, usage schedule, weather condition, etc. For instance, a turbine located at the North Sea does face a different series of defects compared to a turbine located at the Mediterranean Sea, probably due to different weather conditions and salinity levels. The diagnostic system 1 according to the present invention can use these learned part conditions with various attributes from the knowledge graph KB and from various historical recommendations HR to generate a new set of recommendations R. The dynamic nature of the knowledge graph KB based on which it infers new types of part condition relations on service reports are used to generate recommendations that the diagnostic system 1 has never been trained with. This dynamic behavior is performed in a preferred embodiment proactively without any human intervention iteratively consuming new documents or unstructured data. The diagnostic system 1 can be utilized to convert unstructured content into structured knowledge which can subsequently be fed into a physical separated industrial knowledge graph system. This knowledge graph system can be used further for a semantic search, diagnostic and maintenance applications.

## Claims

1.  A method for providing automatically recommendations concerning an industrial system, said method comprising the steps of:

    - recognizing (S1) ontology instances of classes within a domain related ontology using a recurrent neural network (RNN) trained with annotations of input data received from distributed data sources;
    - deriving (S2) relations between recognized ontology instances using a convolutional neural network (CNN) and generating triples (T) each comprising a derived relation and the corresponding ontology instances; and
    - retrieving (S3) at least one recommendation (R) in response to an inquiry and triples (T) inferred from a knowledge based database (KB) populated with the generated triples (T).

2.  The method according to claim 1, wherein the input data comprises structured and/or unstructured domain related data received from distributed data sources.

3.  The method according to claim 2, wherein the unstructured domain related data comprises service reports including text documents related to a technical domain of the respective industrial system.

4. The method according to claim 2 or 3, wherein the unstructured domain related data is annotated with a seed set of entities forming part of the domain related ontology.

5. The method according to one of the preceding claims 1 to 4, wherein semantic representation vectors for a vocabulary of words used in the received unstructured domain related data are calculated using a neural network language model (NNLM).

6. The method according to any of the preceding claims 1 to 5, wherein the recurrent neural network (RNN) used for recognizing ontology instances of classes within the domain related ontology is an Elman recurrent neural network.

7. The method according to claim 5, wherein relations between recognized ontology instances are derived using the convolutional neural network (CNN) on the basis of the calculated semantic representation vectors and position embedding vectors learned during training of the convolutional neural network (CNN) with the annotations.

8. The method according to any of the preceding claims 1 to 7, wherein the at least one recommendation (R) is retrieved in response to the inquiry, the inferred triples and historical recommendations (HR).

9. The method according to any of the preceding claims 1 to 8, wherein the recommendations (R) are output via a user interface to a user and/or output as control signals to control units and/or actors of the industrial system.

10. A diagnostic system for providing recommendations concerning an industrial system,
said diagnostic system (1) comprising:

- an extraction unit (2) adapted to recognize ontology instances of classes within a domain related ontology using a recurrent neural network (RNN) trained with annotations of input data received from distributed data sources and adapted to derive relations between recognized ontology instances using a convolutional neural network (CNN) and to generate triples (T) each comprising a derived relation and the corresponding ontology instances; and
- a processing unit (3) adapted to retrieve at least one recommendation (R) in response to an inquiry (INQ') and triples (T) inferred by an inference engine (IE) from a knowledge based database (KB) populated with triples (T) generated by said extraction unit (2).

11. The diagnostic system according to claim 10, wherein the input data comprises structured and/or unstructured domain related data received from distributed data sources, wherein the unstructured domain related data comprises service reports including text documents related to a technical domain of the respective industrial system.

12. The diagnostic system according to claim 11, wherein the unstructured domain related data is annotated with a seed set of entities forming part of the domain related ontology stored in a database.

13. The diagnostic system according to any of the preceding claims 10 to 12, wherein semantic representation vectors for a vocabulary of words used in the received unstructured domain related data are calculated using a neural network language model (NNLM).

14. The diagnostic system according to any of the preceding claims 10 to 13, wherein relations between recognized ontology instances are derived using the convolutional neural network (CNN) on the basis of the calculated semantic representation vectors and position embedded vectors learned during training of the convolutional neural network (CNN) with the annotations.

15. The diagnostic system according to any of the preceding claims 10 to 14, wherein the processing unit (3) is adapted to retrieve the at least one recommendation (R) in response to the inquiry, the inferred triples (T) and historical recommendations (HR).

16. The diagnostic system according to any of the preceding claims 10 to 15, wherein the recurrent neural network (RNN) used for recognizing ontology instances of classes within the domain related ontology is a Elman recurrent neural network.

17. The diagnostic system according to any of the preceding claims 10 to 16, wherein the at least one retrieved recommendation (R) is output via a user interface to a user and/or output as control signals to control units and/or actors of the respective industrial system.

# FIG 1    STATE OF THE ART

Tips

Damage

HasCondition

IsA

HasPart

IsA

SatisfactoryCondition

HeatErosion

HasCondition

Basket ——→ NormalWear

HasCondition

HasCondition

IsPart

HasCondition

SupportHousing

# FIG 2

```
┌─────────────────┐
│                 │ ⌒ S1
│                 │
└────────┬────────┘
         │
         ▼
┌─────────────────┐
│                 │ ⌒ S2
│                 │
└────────┬────────┘
         │
         ▼
┌─────────────────┐
│                 │ ⌒ S3
│                 │
└─────────────────┘
```

# FIG 3

```
        2          1          3
    ┌───────────────────────────────────┐
    │ ┌─────────┐      ┌─────────┐       │
    │ │         │      │         │    R  │
    │ │    2    │──────▶│   3    │────────▶
    │ │         │      │         │       │
    │ └─────────┘      └─────────┘       │
    └───────────────────────────────────┘
```

# FIG 4

EP 3 173 983 A1

FIG 5

EP 3 173 983 A1

# FIG 6

PL

CL

CNN

the
support
ring
was
found
with
various
erosion
indications
</s>

S

Wemb

Demb

HasCondition

IsCondition

EP 3 173 983 A1

**EP 3 173 983 A1**

---

Europäisches
Patentamt

European
Patent Office

Office européen
des brevets

# EUROPEAN SEARCH REPORT

Application Number

EP 15 19 6557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "THE TRUTH ABOUT TRIPLESTORES The Top 8 Things You Need to Know When Considering a Triplestore", Ontotext white papers, 7 July 2014 (2014-07-07), pages 1-28, XP055273768, Retrieved from the Internet: URL:http://ontotext.com/documents/white_papers/The-Truth-About-Triplestores.pdf [retrieved on 2016-05-19] * the whole document * | 1-17 | INV. G06N3/10 G06F17/27 G06F17/30 ADD. G06N3/04 |
| A | Yoav Goldberg: "A Primer on Neural Network Models for Natural Language Processing", , 5 October 2015 (2015-10-05), XP055273933, Retrieved from the Internet: URL:http://u.cs.biu.ac.il/~yogo/nnlp.pdf [retrieved on 2016-05-20] * the whole document * | 1-17 | |
| A | THIEN HUU NGUYEN ET AL: "Relation Extraction: Perspective from Convolutional Neural Networks", PROCEEDINGS OF THE 1ST WORKSHOP ON VECTOR SPACE MODELING FOR NATURAL LANGUAGE PROCESSING, 31 May 2015 (2015-05-31), pages 39-48, XP055273940, Stroudsburg, PA, USA DOI: 10.3115/v1/W15-1506 * the whole document * | 1-17 | TECHNICAL FIELDS SEARCHED (IPC) G06N G06F |

-/--

The present search report has been drawn up for all claims

| Place of search | Date of completion of the search | Examiner |
|---|---|---|
| The Hague | 24 May 2016 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

**Application Number**

EP 15 19 6557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Lishuang Li ET AL: "Exploring Recurrent Neural Networks to Detect Named Entities from Biomedical Text" In: "Correct System Design", 8 November 2015 (2015-11-08), Springer International Publishing, Cham 032548, XP055273838, ISSN: 0302-9743 ISBN: 978-3-642-27584-5 vol. 9427, pages 279-290, DOI: 10.1007/978-3-319-25816-4_23, * the whole document * | 1-17 | |
| X | ULLI WALTINGER ET AL: "Natural Language Access to Enterprise Data", AI MAGAZINE., vol. 35, no. 1, 21 March 2014 (2014-03-21), pages 38-52, XP055274129, CA ISSN: 0738-4602 * page 38 - page 47 * | 1-17 | |

TECHNICAL FIELDS
SEARCHED      (IPC)

The present search report has been drawn up for all claims

| Place of search | Date of completion of the search | Examiner |
|---|---|---|
| The Hague | 24 May 2016 | Cilia, Elisa |

EPO FORM 1503 03.82 (P04C01)